# EUROPÄISCHE PATENTANMELDUNG

(11) **EP 2 423 058 A1**
(43) Veröffentlichungstag der Anmeldung: **29.02.2012**
(21) Anmeldenummer: 11178733.9
(22) Anmeldetag: 24.08.2011
(51) Int. Cl.: B60R 22/26, B60N 2/68

(54) **Sitzbank für Fahrzeuge**

(30) Priorität: 26.08.2010 DE 202010008379 U
(71) Anmelder: REIMO Reisemobil-Center GmbH, 63329 Egelsbach (DE)
(72) Erfinder: Hoffmann, Ralf, 64293 Darmstadt (DE)
(74) Vertreter: Katscher Habermann Patentanwälte

(57) **Zusammenfassung**

Bei einer Sitzbank (2) für Fahrzeuge, insbesondere für Wohnmobile, mit einer Sitzfläche (4), mit einer an einem Sitzflächengestell (5) festgelegten Rückenlehne (3), wobei die Rückenlehne (3) einen mit einer Polsterung bedeckten Tragrahmen (10) aufweist, und mit einem Sicherheitsgurtaufroller (12), ist erfindungsgemäß mindestens ein Sicherheitsgurtaufroller (12) an dem Tragrahmen (10) festlegbar. Der Sicherheitsgurtaufroller (12) ist innerhalb eines Gurtholms (11) angeordnet, wobei der Gurtholm (11) an dem Tragrahmen (10) befestigt ist. Ein Sicherheitsgurt (9) ist innerhalb des Gurtholms (11) von dem Sicherheitsgurtaufroller (12) zu einem Stirnbereich (13) der Rückenlehne (3) führbar. Im Stirnbereich (13) der Rückenlehne (3) ist ein Sicherheitsgurtauslass (15) und eine Sicherheitsgurtumlenkvorrichtung angeordnet.

## Beschreibung

Die Erfindung betrifft eine Sitzbank für Fahrzeuge, insbesondere für Wohnmobile, mit einer Sitzfläche, einem Sicherheitsgurt und einer an einem Sitzflächengestell festgelegten Rückenlehne, wobei die Rückenlehne einen mit einer Polsterung bedeckten Tragrahmen aufweist.

Sitzbänke für den Einbau in Fahrzeugen, wie sie insbesondere für den Umbau von Nutzfahrzeugen zu Wohnmobilen verwendet werden, weisen üblicherweise ein an dem Fahrzeugboden befestigtes Sitzflächengestell auf. An diesem Sitzflächengestell wird häufig auch die Rückenlehne der Sitzbank befestigt. Üblicherweise sind die Sitzbänke so konstruiert, dass ein oder mehrere Sicherheitsgurtaufroller auf der Rückseite der Sitzbank an dem Sitzflächengestell befestigt werden können. Von diesem Sicherheitsgurtaufroller aus wird der Sicherheitsgurt über eine Umlenkrolle nach oben zur Stirnseite der Rückenlehne geführt, erneut umgelenkt und anschließend zu einem Verschlussmechanismus im Bereich der Sitzfläche geführt.

Häufig werden Sitzbänke mit Kufen oder Stützstreben an dem Fahrzeugboden befestigt. Auf Grund der unterschiedlichen Abmessungen des Innenraums und der Anordnung der tragenden Teile der Fahrgestelle verschiedener Fahrzeuge kann sich der zwischen den Kufen vorgesehene Abstand unterscheiden müssen und eine jeweils individuelle Anordnung der Kufen erforderlich machen. Die Kufen werden dabei ebenso wie die Sicherheitsgurtaufroller an dem Sitzflächengestell befestigt. Üblicherweise ist es nicht beziehungsweise nur mit einem unverhältnismäßig hohen Aufwand möglich, die Sicherheitsgurtaufroller an dem Sitzflächengestell so zu montieren, dass die Kufen unabhängig von den Sicherheitsgurtaufrollern an dem Sitzflächengestell angeordnet und festgelegt werden können. Normalerweise kann an einer Position, an der ein Sicherheitsgurtaufroller montiert ist, keine Kufe montiert werden und umgekehrt.

Werden Sitzbänke zum Nachrüsten beispielsweise für Wohnmobile oder für Personentransportfahrzeuge angeboten, so muss jede Sitzbank mit der Anordnung ihrer Kufen einem vorgesehenen Fahrzeugtyp angepasst, konstruiert und hergestellt werden. Daher muss auch die Position der Sicherheitsgurtaufroller an den jeweiligen Fahrzeugtyp angepasst werden. Dies führt zu einem erheblich erhöhten Herstellungsaufwand, da für jede ansonsten vergleichbare Sitzbank verschiedene Modelle konstruiert, hergestellt und vertrieben werden müssen.

Die Sicherheitsgurtaufroller sind an dem Sitzflächengestell auf der Rückseite der Sitzbank befestigt. Üblicherweise ragen die Sicherheitsgurtaufroller dabei über die Rückseite der Sitzbank hinaus in den Fahrzeugraum hinein. Dieser Raum kann nicht oder nur eingeschränkt anderweitig, beispielsweise für den Einbau von Schränken, genutzt werden. Zudem muss darauf geachtet werden, dass die auf der Rückseite der Sitzbank offen von den Sicherheitsgurtaufrollern zu der Stirnseite der Rückbank geführten Sicherheitsgurte ohne Mühe herausgezogen und automatisch wieder eingezogen werden können. Daher muss sichergestellt sein, dass der Lauf des Sicherheitsgurts nicht durch auf der Rückseite der Sitzbank eingebaute oder abgelegte Gegenstände blockiert wird.

Die Rückenlehne und das Sitzflächengestell sind auch über den Sicherheitsgurt miteinander verbunden. Soll die Rückenlehne von der Sitzbank demontiert werden, muss also zunächst der Sicherheitsgurt von der Rückenlehne entfernt werden. Die Demontage wird dadurch erheblich erschwert und oftmals unmöglich gemacht, da aus Sicherheitsgründen eine Demontage der Sicherheitsgurte unterbleiben sollte.

Aufgabe der Erfindung ist es demzufolge, eine Sitzbank so auszugestalten, dass sie mit geringem Aufwand in verschiedenen Fahrzeugen platzsparend eingebaut und auf einfache Weise montiert und demontiert werden kann.

Diese Aufgabe wird erfindungsgemäß dadurch gelöst, dass mindestens ein Sicherheitsgurtaufroller an dem Tragrahmen festlegbar ist. Der Sicherheitsgurtaufroller wird also nicht am Sitzflächengestell, sondern an dem Tragrahmen der Rückenlehne befestigt. Auf diese Weise ist es möglich, beispielsweise die Kufen an einer beliebigen Position am Sitzflächengestell anzuordnen. Zudem muss der Sicherheitsgurt zur Demontage der Sitzbank nicht mehr entfernt werden, da die Rückenlehne zusammen mit den daran festgelegten Sicherheitsgurtaufrollern in einfacher Weise von dem Sitzflächengestellt gelöst werden kann.

Vorteilhafterweise ist vorgesehen, dass der Sicherheitsgurtaufroller innerhalb einer Rückenlehnenpolsterung angeordnet ist. Auf diese Weise muss auf der Rückseite der Sitzbank kein Raum für die Anordnung der Sicherheitsgurtaufroller vorgesehen werden. Zusätzlich wird der ästhetische Gesamteindruck der Sitzbank durch die versteckt liegenden Sicherheitsgurtaufroller verbessert. Die Polsterung von Sitzbänken besitzt häufig Konturen, die beispielsweise einzelne Sitzplätze konturieren, wodurch der Sitzkomfort gesteigert werden kann. Für die Anordnung innerhalb der Polsterung bieten sich beispielsweise Bereiche zwischen benachbarten Sitzpositionen an, in denen die Kontur stärker hervortritt, da dort auf den Sicherheitsgurtaufroller ausreichend Polstermaterial aufgebracht werden kann. Auf diese Weise kann zusätzlich Material eingespart werden.

Erfindungsgemäß ist vorgesehen, dass der Sicherheitsgurtaufroller innerhalb eines Gurtholms angeordnet ist, wobei der Gurtholm an dem Tragrahmen befestigt ist. Dieser Gurtholm ist so ausgelegt, dass er beispielsweise bei einem Auffahrunfall die auf den Sicherheitsgurt und den Sicherheitsgurtaufroller wirkenden Kräfte aufnehmen und über den Tragrahmen an das Sitzflächengestell und somit an die Karosserie weitergeben kann. Des Weiteren stabilisiert der Gurtholm den Tragrahmen der Rückenlehne zusätzlich. Der Gurtholm kann beispielsweise eine kastenförmige Struktur aufweisen.

Es ist auch denkbar, dass der Gurtkasten beziehungsweise ein Teil des Gurtkastens mit einem Füllmaterial wie beispielsweise Montageschaum befüllt wird, wobei eine möglichst ungehinderte Führung des Sicherheitsgurts innerhalb des Gurtkastens gewährleistet werden sollte. Auf diese Weise kann der Gurtkasten beziehungsweise Gurtholm zusätzlich stabilisiert werden. Außerdem kann dadurch einer Verschmutzung des Innenraums des Gurtkastens und des Sicherheitsgurtaufrollers vermieden. Schmutz kann beispielsweise über eine zur Führung des Sicherheitsgurts erforderliche Gurtkastenöffnung in den Gurtkasten eintreten. Bei der Befüllung ist darauf zu achten, dass Bereiche zur Aufnahme des Sicherheitsgurtaufrollers und Bereiche zur Führung des Sicherheitsgurts innerhalb des Gurtholms von der Befüllung ausgenommen werden. Es können auch vorgefertigte Formteile in dem Gurtkasten angeordnet werden, die eine Führung des Sicherheitsgurts unterstützen.

Um auf der Rückseite der Sitzbank verschiedene Gegenstände lagern zu können oder beispielsweise Schränke einbauen zu können, ist vorteilhafterweise vorgesehen, dass der Sicherheitsgurt innerhalb des Gurtholms von dem Sicherheitsgurtaufroller zu einem Stirnbereich der Rückenlehne führbar ist. Der Sicherheitsgurt wird erst in Schulterhöhe aus der Rückenlehne herausgeführt. Es wird also nur der absolut notwendige Teil des Sicherheitsgurts außerhalb der Rückenlehne geführt. Dadurch kann der Sicherheitsgurt nicht durch an der Rückseite der Sitzbank lagernde Gegenstände blockiert oder beschädigt werden.

Um eine zusätzliche Umlenkung des Sicherheitsgurts innerhalb der Rückenlehne zu vermeiden ist weiter vorgesehen, dass eine Sicherheitsgurtaufrollerausführöffnung des Sicherheitsgurtaufrollers im Wesentlichen in Richtung des Stirnbereichs der Rückenlehne ausgerichtet ist. Auf diese Weise kann zusätzlich Bauraum eingespart werden, da keine zusätzliche Umlenkrolle im Bereich des Sicherheitsgurtaufrollers für die Führung des Sicherheitsgurts notwendig ist.

Erfindungsgemäß ist weiter vorgesehen, dass im Stirnbereich der Rückenlehne ein Sicherheitsgurtauslass angeordnet ist. Der Sicherheitsgurt wird also von dem Sicherheitsgurtaufroller bis auf Schulterhöhe vollständig innerhalb der Rückenlehne geführt.

Um eine leichtgängige und für den Sicherheitsgurt möglichst schonende Führung im Stirnbereich der Rückenlehne zu gewährleisten ist vorgesehen, dass im Stirnbereich der Rückenlehne eine Sicherheitsgurtumlenkvorrichtung angeordnet ist.

Zur Vereinfachung des Einbaus der Sitzbank in verschiedenen Fahrzeugtypen ist weiter vorgesehen, dass die Sitzbank Kufen aufweist, welche mit dem Fahrzeugboden verbindbar sind und an der Sitzbank seitlich verstellbar befestigt sind. Die seitlich verstellbaren Kufen können auf diese Weise vor der Montage der Sitzbank an die durch das Fahrzeug und insbesondere den Fahrzeugboden vorgegebenen Anbringungsmöglichkeiten angepasst werden. Eine Sitzbank mit seitlich verstellbaren Kufen, die eine Anpassung an die gängigen Fahrzeugtypen ermöglicht, kann in einer großen Stückzahl und dadurch mit geringeren Kosten hergestellt werden, als dies bei einer speziellen Fertigung der Sitzbank für jeden Fahrzeugtyp möglich wäre. Auch ist ein nachträglicher Einbau einer derartigen Sitzbank, beispielsweise beim Ausbau oder Umbau von Wohnmobilen, ohne weiteres möglich.

Zur weiteren Vereinfachung der Montage und Demontage der Sitzbank wird vorgeschlagen, dass die Rückenlehne lösbar mit dem Sitzflächengestell befestigbar ist. Die Rückenlehne wird mit einer geeigneten Befestigungseinrichtung lösbar an dem Sitzflächengestell festgelegt. Indem diese Befestigung einfach lösbar ausgestaltet ist, wird eine einfache Montage und Demontage der gesamten Sitzbank ermöglicht, da die Rückenlehne und das Sitzflächengestell getrennt voneinander aus dem Fahrzeug entfernt werden können.

Um den Innenraum des Fahrzeugs möglichst flexibel an verschiedene Anforderungen anpassen zu können, ist weiter vorgesehen, dass die Rückenlehne klappbar ist.

Nachfolgend werden Ausführungsbeispiele der Erfindung näher erläutert, welche in der Zeichnung dargestellt sind. Es zeigt:
Fig. 1 eine schematische Darstellung einer Frontansicht einer in einem Fahrzeug eingebauten Sitzbank,
Fig. 2 eine schematische Schnittansicht eines in der Rückenlehne angeordneten Tragrahmens entlang der Linie II-II in Fig. 1,
Fig. 3 eine schematische Schnittansicht des in Fig. 2 dargestellten Tragrahmens entlang der Linie III-III,
Fig. 4 eine Schnittansicht einer Sitzbank entlang der in Fig. 1 dargestellten Linie IV-IV.

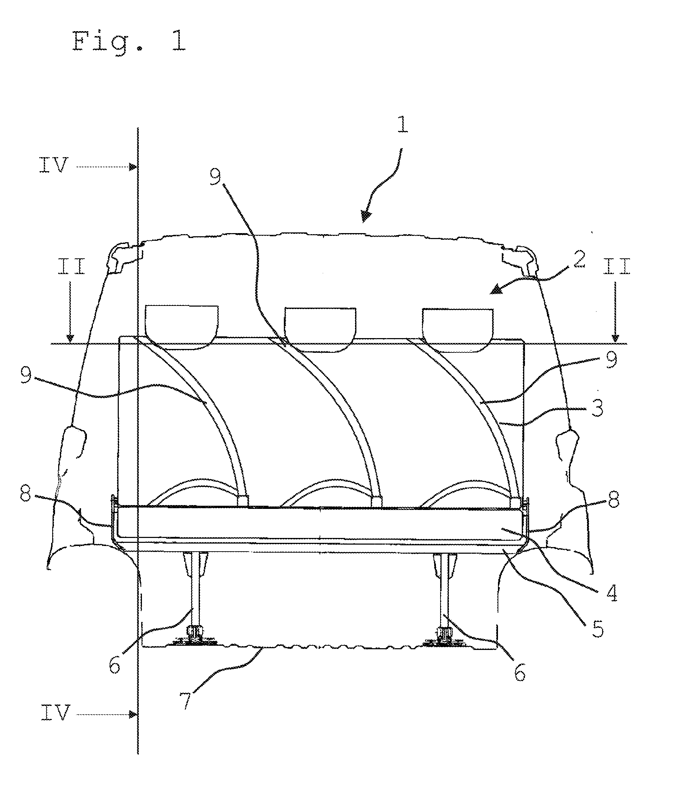

Fig. 1 zeigt eine in einem Fahrzeug 1 eingebaute Sitzbank 2 in Frontansicht. Die Sitzbank 2 besitzt eine Rückenlehne 3, eine Sitzfläche 4 und ein Sitzflächengestell 5. Die Sitzbank 2 ist mit Kufen 6 an dem Fahrzeugboden 7 festgelegt. Die Rückenlehne 3 ist mit Verbindungselementen 8 mit dem Sitzflächengestell 5 verbunden. Die Sitzbank 3 ist mit drei Dreipunkt-Sicherheitsgurten 9 ausgestattet.

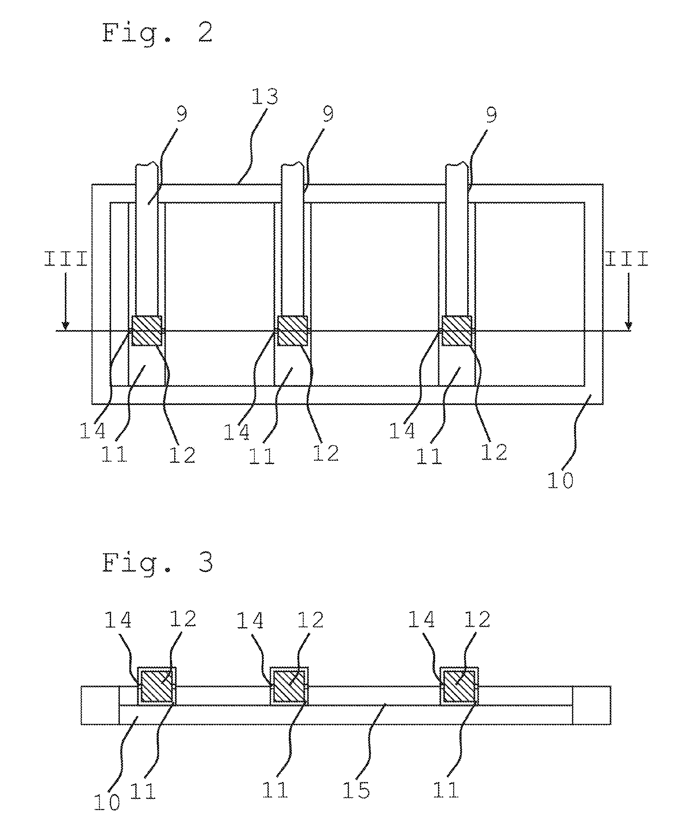

In Fig. 2 ist schematisch eine Schnittansicht eines in der Rückenlehne 3 angeordneten Tragrahmens 10 entlang der Linie II-II in Fig. 1 dargestellt. An dem Tragrahmen 10 sind drei Gurtholme 11 befestigt. In jedem Gurtholm 11 ist jeweils ein Sicherheitsgurtaufroller 12 angeordnet. Die Sicherheitsgurte 9 werden in Richtung einer oben befindlichen Stirnfläche 13 des Tragrahmens 10 aus dem Sicherheitsgurtaufroller 12 herausgeführt. Auf diese Weise kann auf eine zusätzliche Umlenkrolle im Bereich des Sicherheitsgurtaufrollers verzichtet werden. In diesem Ausführungsbeispiel wird der Sicherheitsgurt 9 vollständig in dem Gurtholm 11 bis zur Stirnfläche 13 geführt. Der Sicherheitsgurtaufroller 12 ist mit der Gurtaufrollerwelle 14 drehbar gelagert an dem Gurtkasten 11 befestigt. Auf Grund der Rückstellkraft einer nicht dargestellten an der Welle angebrachten Rückstellfeder wird der Sicherheitsgurt automatisch aufgerollt.

In Fig. 3 ist schematisch eine Schnittansicht des in Fig. 2 dargestellten Tragrahmens 10 entlang der Linie III-III gezeigt. An dem Tragrahmen 10 sind drei Gurtholme 11 befestigt. In jedem Gurtholm 11 ist jeweils ein Sicherheitsgurtaufroller 12 angeordnet. Der Sicherheitsgurtaufroller 12 ist mit der Gurtaufrollerwelle 14 drehbar gelagert an dem Gurtkasten 11 befestigt. An dem Tragrahmen 10 ist ein Maschendraht 15 befestigt. Dieser Maschendraht 15 dient der Stabilisierung der nicht dargestellten Polsterung. Anstatt durch einen Maschendraht 15 kann die Polsterung auch durch andere Vorrichtungen wie zum Beispiel weitere innerhalb des Tragrahmens 10 angeordnete dünne Holme oder auch durch eine Kunststoffmatte gestützt werden.

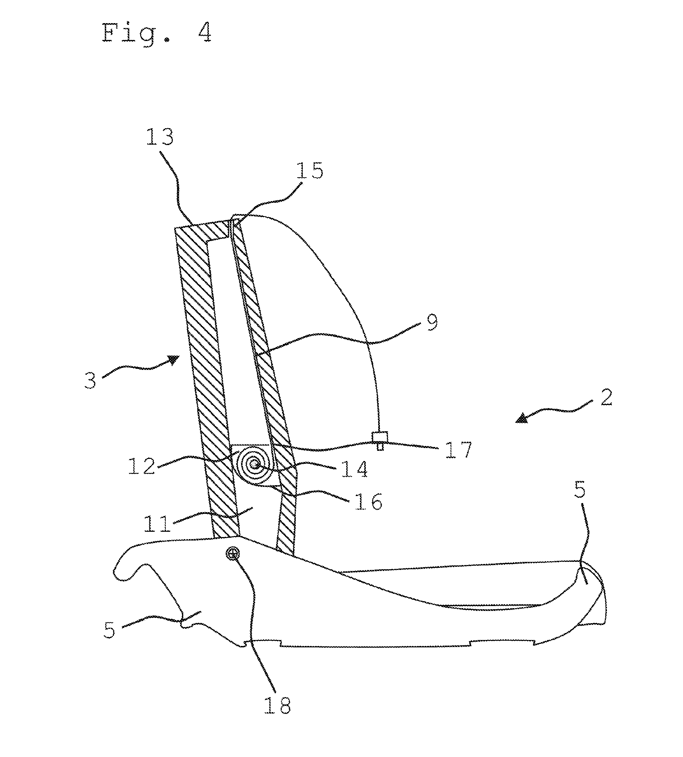

Fig. 4 zeigt schematisch eine Schnittdarstellung einer Sitzbank 2 entlang der in Fig. 1 dargestellten Linie IV-IV. Innerhalb der Rückenlehne 3 ist ein Gurtholm 11 angeordnet. Innerhalb des Gurtholms 11 befindet sich der Sicherheitsgurtaufroller 12. Der Sicherheitsgurt 9 wird in Richtung der Stirnfläche 13 der Rückenlehne 3 aus dem Sicherheitsgurtaufroller 12 herausgeführt und verläuft anschließend vollständig in dem Gurtholm 11 bis zu einem Sicherheitsgurtauslass 15. Der Sicherheitsgurtaufroller 12 besitzt einen Gurtaufrollkasten 16, der an dem Gurtkasten 11 befestigt ist. Innerhalb des Gurtaufrollkastens 16 wird der Sicherheitsgurt auf einer nicht dargestellten an der Gurtaufrollwelle 14 befestigten Gurtspindel aufgerollt. Der Sicherheitsgurt 9 wird durch die Sicherheitsgurtaufrollerausführöffnung 17 aus dem Gurtaufrollerkasten 16 herausgeführt. Die Anordnung der Mechanik des Sicherheitsgurtaufrollers 12 innerhalb eines Gurtaufrollerkastens 16 erlaubt eine einfache Vormontage der Sicherheitsgurtaufrollers 12 unabhängig von der Konstruktion der Sitzbank. Außerdem wird die Mechanik des Sicherheitsgurtaufrollers 12 durch den Gurtaufrollerkasten 16 vor Verschmutzungen geschützt.

Die Rückenlehne 3 ist an dem Sitzflächengestell 5 mit Hilfe des Befestigungselements 18 schwenkbar, bzw. kippbar gelagert mit dem Sitzflächengestell 5 verbunden.

## Patentansprüche

1. Sitzbank (2) für Fahrzeuge, insbesondere für Wohnmobile, mit einer Sitzfläche (4), einem Sicherheitsgurt (9) und einer an einem Sitzflächengestell (5) festgelegten Rückenlehne (3), wobei die Rückenlehne (3) einen mit einer Polsterung bedeckten Tragrahmen (10) aufweist, **dadurch gekennzeichnet, dass** mindestens ein Sicherheitsgurtaufroller (12) an dem Tragrahmen (10) festlegbar ist.

2. Sitzbank nach Anspruch 1, **dadurch gekennzeichnet, dass** der Sicherheitsgurtaufroller (12) innerhalb einer Rückenlehnenpolsterung angeordnet ist.

3. Sitzbank nach einem der voranstehenden Ansprüche,
**dadurch gekennzeichnet, dass** der Sicherheitsgurtaufroller (12) innerhalb eines Gurtholms (11) angeordnet ist, wobei der Gurtholm (11) an dem Tragrahmen (10) befestigt ist.

4. Sitzbank nach einem der voranstehenden Ansprüche,
**dadurch gekennzeichnet, dass** ein Sicherheitsgurt (9) innerhalb des Gurtholms (11) von dem Sicherheitsgurtaufroller (12) zu einem Stirnbereich (13) der Rückenlehne (3) führbar ist.

5. Sitzbank nach einem der voranstehenden Ansprüche,
**dadurch gekennzeichnet, dass** eine Sicherheitsgurtaufrollerausführöffnung (17) des Sicherheitsgurtaufrollers (12) im Wesentlichen in Richtung des Stirnbereichs (13) der Rückenlehne (3) ausgerichtet ist.

6. Sitzbank nach einem der voranstehenden Ansprüche,
**dadurch gekennzeichnet, dass** im Stirnbereich (13) der Rückenlehne (3) ein Sicherheitsgurtauslass (15) angeordnet ist.

7. Sitzbank nach einem der voranstehenden Ansprüche,
**dadurch gekennzeichnet, dass** im Stirnbereich (13) der Rückenlehne (3) eine Sicherheitsgurtumlenkvorrichtung angeordnet ist.

8. Sitzbank nach einem der voranstehenden Ansprüche,
**dadurch gekennzeichnet, dass** die Sitzbank Kufen (6) aufweist, welche mit dem Fahrzeugboden (7) verbindbar sind und an der Sitzbank (2) seitlich verstellbar befestigt sind.

9. Sitzbank nach einem der voranstehenden Ansprüche,
**dadurch gekennzeichnet, dass** die Rückenlehne (3) lösbar mit dem Sitzflächengestell befestigbar ist.

10. Sitzbank nach einem der voranstehenden Ansprüche,
**dadurch gekennzeichnet, dass** die Rückenlehne (3) klappbar ist.
